# EUROPEAN PATENT SPECIFICATION

(11) **EP 2 223 556 B1**
(45) Date of publication and mention of the grant of the patent: **27.04.2016**
(21) Application number: 08858153.3
(22) Date of filing: 14.11.2008
(51) Int. Cl.: H04M 15/00, H04W 4/24, H04W 16/14, H04W 28/16

(54) **ALLOCATION OF RESOURCES TO SHARED SPECTRUM OPERATORS**
VERGABE VON BETRIEBSMITTELN AN BETREIBER EINES GEMEINSAM BENUTZTEN SPEKTRUMS
ATTRIBUTION DE RESSOURCES À DES OPÉRATEURS À SPECTRE PARTAGÉ

(30) Priority: 05.12.2007 US 992434 P
(43) Date of publication of application: 01.09.2010
(73) Proprietor: Telefonaktiebolaget LM Ericsson (publ), 164 83 Stockholm (SE)
(72) Inventor: BAUCKE, Stephan, 52064 Aachen (DE); SACHS, Joachim, 52066 Aachen (DE); WIEMANN, Henning, 52080 Aachen (DE)
(74) Representative: Hoffmann Eitle
(86) International application number: PCT/EP2008/065621
(87) International publication number: WO 2009/071431

(56) References cited:
- WO-A-01/77779
- US-A1- 2002 035 633
- US-A1- 2006 083 205
- US-A1- 2007 005 327
- VLADIMIR BRIK ET AL: "Towards an Architecture for Efficient Spectrum Slicing" MOBILE COMPUTING SYSTEMS AND APPLICATIONS, 2007. HOTMOBILE 2007. EIGHTH IEEE WORKSHOP ON, IEEE, PISCATAWAY, NJ, USA, 1 March 2007 (2007-03-01), pages 64-69, XP031165181 ISBN: 978-0-7695-3001-7 cited in the application

## Description

### [Technical Field]

The present application relates to the field of infrastructure resources for wireless communication systems, such as a system of one or more nodes of such a wireless communication system, to corresponding methods for providing communication services in a wireless communication system, and to various elements of such infrastructure resources that may be involved in such methods.

### [Background]

Radio spectrum available for communication services is limited and needs to be used efficiently. Communication systems are mainly subject to frequency spectrum licensing. This means that entities that want to operate a wireless communication system have to first obtain a spectrum license for a frequency range that allows to operate communication devices (e.g. base stations, nodeBs, access points) that use this spectrum range. Such a spectrum license has a certain life time, a regional validity (for mobile communication networks typically bound to the area of the country) plus other boundary conditions, like the maximum output power or power density that may be used, the maximum interference that may be caused to adjacent frequency bands, etc. Often a license is bound to the services that may be serviced with the communication system (e.g. broadcast, telephony or mobile communication services); it may also imply regulatory requirements (e.g. the license obligates the licensee to provide coverage/capacity of services within a certain time to a certain percentage of the population/users or licensed area). In some spectrum regions unlicensed for license-exempt) use of spectrum is possible (e.g. in the spectrum bands used by Wireless LAN, Bluetooth, etc.) In this case transmission is typically reduced to low power levels to avoid interference with other systems. If too many systems are operated in proximity simultaneously, substantial interference between those systems exists, and can in the extreme make them unusable.

A spectrum license provides an operator with the exclusive right of usage of the licensed spectrum ranges during the life time of the license. Based on this knowledge, the operator invests in communication infrastructure to provide communication services. Spectrum licenses are typically assigned for long time periods, e.g. 20 years, and regulatory rules of spectrum usage are internationally coordinated. This leads to large time frames in the order of decades for assigning new spectrum licenses which can then be used by new communication systems.

The slow allocation of spectrum licenses combined with the coupling of a license to a certain communication (i.e. transmission) system (like UMTS, GPRS, CDMA2000, LTE, WiMAX) leads to a slow pace of technological evolution of the transmission system being used in a licensed spectrum range. As a result, the transmission system that is being used is often already outdated in technical features (like transmission efficiency, cross-layer optimization techniques, smart antenna schemes, scheduling, error recovery, security mechanism, routing, relaying, mobility management, channel coding or joint source-channel-coding, etc.). The technical development cycle of advanced communication concepts is faster than the cycles of spectrum licensing, or the pace in which communication systems operated in licensed spectrum are evolved in tedious standardization processes.

Another problem is that the installation of communication system infrastructure requires huge investment costs; these costs are in particular high in the access networks (like e.g. mobile and wireless networks) which provide access for the end-user to the core infrastructure. This high investment costs also prohibits or slows down the introduction of new networking features. As different communication systems are specified in an integrated systems specification there is little possibility of reusing infrastructure between different communication systems. For example, it is not possible to reuse existing network nodes of UTRAN (UMTS) communication system for building a new EUTRAN (LTE) communication system. Some concepts of network sharing or infrastructure sharing exist for 3GPP networks; however, these schemes allow different operators only to have separate relationships to the end user (e.g. have different subscriptions schemes, tariffs, etc.) - it does not enable operators of the shared network to use different communication technologies in the shared network; the communication system is the same for all operators sharing a network/infrastructure.

For all these reasons the technological development of communication systems is hampered, which leads to system inefficiencies as the technological potential is not exploited. As the licensing process and the network installation process take a long time, it happens often that licensed spectrum is not fully utilized by the licensee, which leads to inefficient spectrum usage.

Some approaches exist that try to overcome these problems. One approach taken is generally denoted as cognitive radio (CR). CR assumes that different radio systems are not bound to spectrum. They all compete for the same spectrum. Spectrum coordination is made by different systems sensing if others systems are using a targeted spectrum band and then either sharing the spectrum resources according to a spectrum etiquette, or searching and reconfiguring for new frequency bands. This makes long-term spectrum licensing unnecessary, as different communication systems all can use different frequency ranges and automatically adapt to the existence of further communication systems.

CR can partly overcome the above stated problems, however, there are limitations and some problems remain open:
- CR allows faster introduction of new wireless communication systems since they are not tightly bound to spectrum usage.
- There are some limitations to what extent CR can be used in spectrum bands where systems are already established that do not follow the CR sharing etiquette.
- CR does hot overcome the financial burden that for every access system new access infrastructure needs to be provided.
- CR has the problem of enforcing the spectrum etiquette, and detecting the abuse of the sharing etiquette.
- CR has difficulties in providing reliability and predictability to the access systems on the usable resources. Depending on how many concurrent CR systems are active, the usable spectrum resources per CR system vary. This leads to high financial risks in planning the installation of an infrastructure.
- CR requires higher complexity of the radio sub-system, which is in particular difficult and costly in battery-driven and small devices. CR requires that different signal waveforms are supported, that different frequency bands can be used, etc. This puts high requirements on spectrum filters, power amplifiers, wide-band antennas (even multiple different antenna sub-systems). Possibly also software defined and (re-) configurable platforms are required, which have high demand on processors, buses and hardware/software architecture, compared to dedicated devices which can use specific hardware.

Another approach to overcome the problem is based on so-called secondary licensing, as e.g. proposed in V. Brik, A. Mishra, S. Banerjee, P. Bahl, Towards an Architecture for Efficient Spectrum Slicing, HotMobile 2007, Tucson, Arizona, (February 2007). In this case it is still assumed that some licensee is awarded a spectrum license from a regulator. However, the licensee can distribute the licensed spectrum further to other entities on a secondary market (either directly or via a spectrum broker). This process can be realized in an auction, which means that multiple interested buyers of spectrum bid for spectrum according to the auctioning rules.

To give an example, a licensee may receive a license from a regulator (e.g. for 3 carriers). The licensee can then sell e.g. one carrier on secondary market (via a spectrum broker or directly), possibly using a spectrum negotiation protocol. The spectrum buyer can bid for spectrum for a certain location and a certain time span, resulting in interference-free short-term spectrum allocation.

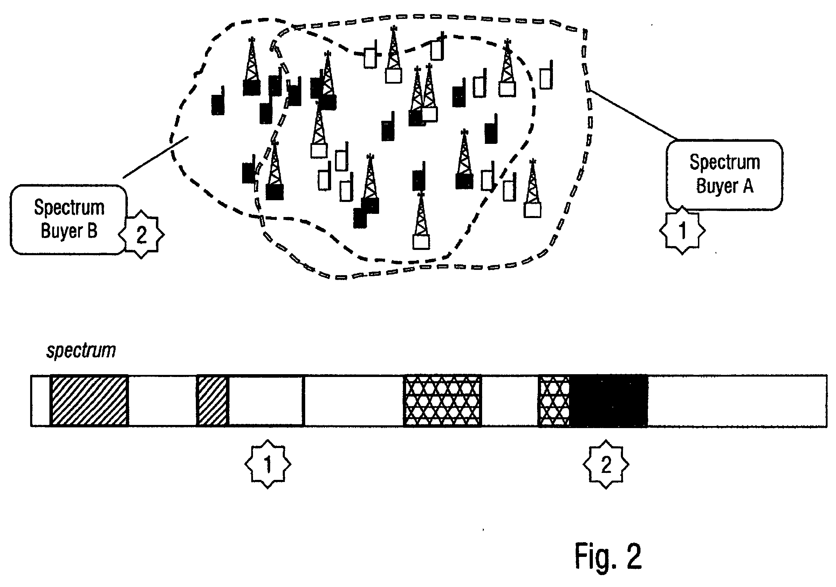

A result of the bidding process is that a part of the spectrum of the original license holder is sold to a spectrum buyer as a secondary license. The secondary license provides the spectrum buyer with exclusive access to the specified spectrum range, for a specified time, for a specified area, with possibly some additional boundary conditions (like a maximum power fence or interference level that is allowed at the edge of the area). Secondary licensing enables shorter licensing cycles as the license does not need to be generally harmonized by a regulator, but rather it can be freely determined by the licensee. Further, every buyer of a spectrum has a freedom to choose which communication system to use within the spectrum/area/time that he obtained the exclusive rights for in the secondary license. As a result, there is competition in the development of more capable communication systems. This is presented figure 2, where it is schematically shown how two spectrum buyers have bought secondary licenses for a certain area and a certain time period. However, the different secondary licenses are for different spectrum ranges. Each spectrum buyer can then install a communication system; these communication systems can differ in their transmission functionality, e.g. in the modulation scheme, the channel coding, the multi-antenna (e.g. MIMO or beamforming) configuration, the scheduling, the link layer protocols, the error recovery schemes (ARQ, HARQ), the encryption and ciphering schemes, the routing protocols and schemes, the mobility and handover schemes and protocols, the radio resource management functionality (like link adaptation, power control, resource allocation, admission control, congestion control), the network and transport protocols, the Quality-of-Service mechanisms). The communication systems can independently use e.g. mesh-networking, ad-hoc networking or cellular networking transmission methods. This competition between different communication systems motivates the usage of advanced technological concepts. However, the communication methods (protocols, etc. of each communication system must conform to the secondary license agreement, i.e. stay within the specified spectrum range and e.g. the maximum power at the edge of the agreed area (i.e. power fence).

Nonetheless, the approach of secondary licensing also has some problems. Every spectrum buyer has to install his own communication system infrastructure. As a result, the total costs for all communication systems in the area is very high; this can easily prohibit that a business case for a communication system based on a secondary license exists - thus prohibiting competition of technological evolution. Assuming a shorter life-time of secondary licenses, the infrastructure costs also need to be considered to provide a business case in a shorter time frame.

Another problem is that it has to be validated and enforced that the communication system of each spectrum buyer is operating in conformance with the secondary license (e.g. according to the spectrum range, the time period, the area that is covered by the secondary license). The enforcement has to be performed by the very same operator, who on the other hand has an incentive for violating the license. A method for the enforcement of a secondary license has been proposed by Brik et al. It requires that the secondary license policies are specified in a cryptographically protected certificate, and every device of the communication system (i.e. each node and terminal) has a tamper-proof and certified entity for enforcement of the secondary license. Such an approach dramatically increases the cost of the system, for it requires specialized tamper-proof hardware, a stringent certification process and environment for certification of the tamper-proof hardware, a cryptographic infrastructure that provides the secondary license certificates. But even then, it is doubtful if the license enforcement entity cannot be manipulated by hardware or software modifications.

To summarize, some of the problems are:
- too slow an adoption of new technological features due to long cycles of spectrum licensing and communication system infrastructure upgrades/replacement. This results in low efficiency of used communication systems and delay in support for new services.
- no support for cost-efficient infrastructure sharing between different operators of communication systems while maintaining for each communication system operator the flexibility to modify and upgrade the transmission functionality used in the communications system.
- enforcing that different communication systems that access the same spectrum resources behave according to the rules for accessing the spectrum resources.

In addition to the above, US 2006/0083205 A1 proposes the concept of *"Adaptive Cognitive Radio" (ACR)* which should be understood as a combination of "Software *Defined Radio" (SDR),* so-called *"spectrum sensing",* and so-called *"policy specific functions".* However, the respective teaching is solely concerned with sharing spectrum resources and leaves processing resources completely aside. Moreover, it is not considered that several service providers use and share the same hardware. Consequently, service providers cannot independently and dynamically configure their own virtual network resources, such as nodes.

Yet further, WO 01/77779 A2 Introduces so-called "VMI objects" that are based on the common virtualization based on VM-Ware^{®}. However, the respective teaching considers these VMI instances only in conjunction with providing different protocols on some common hardware.

### [Summary]

It is an object of the present invention to provide improvements in the field of wireless communication, especially with regard to efficient use of infrastructure resources and spectrum resources.

This object is solved by subject-matter of the independent claims. The dependent claims recite advantageous embodiments.

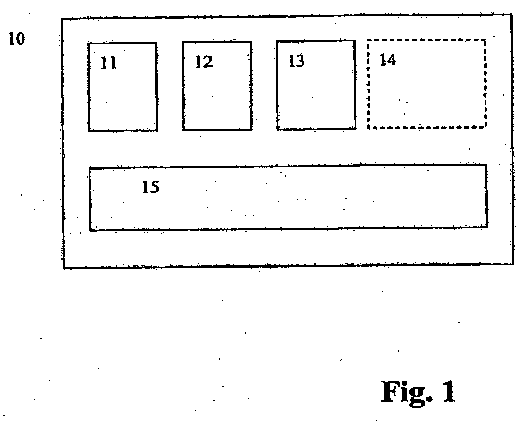

An example is schematically shown in Fig. 1, where reference 10 numeral 10 represents the infrastructure resource (e.g. a base station of a wireless communication system), and 11-13 represent transmission system instances generated and managed by entity 15, which may comprise a part for controlling the instantiation and maintenance of transmission system instances and a part for controlling the allocation of available physical resources. Numeral 14 represents available physical resources that can be used for instantiating a further transmission system instance. The individual instances are independently configurable, i.e. each transmission system instance can be configured independently of the others with respect to how transmission is performed. Thus, the transmission system instances are not aware of each other, i.e. that several instances share the same infrastructure resource. In this way, effectively independent transmission systems (e.g. using different radio access technologies) can be provided, but without the necessity of providing correspondingly separate infrastructure elements. As a consequence, a common infrastructure can be used to utmost efficiency, while at the same time full flexibility is retained. Furthermore, the transmission system instances are also dynamically configurable, i.e. the configuration can be changed over time, thereby also providing flexibility and adaptability in the time dimension.

A basic concept of the invention is to provide a virtualization mechanism to a wireless communication system (a virtualized wireless communication system is also called "Virtual *Radio"* herein). The mechanism may be arranged such that it allows that different instances of transmission systems that can be independently and simultaneously realized on the same communication system infrastructure, and that the different instances of transmission systems (which will also be referred to as "slices" herein) can be independently and dynamically configured (e.g. via a so-called slice manager or transmission system instance manager or virtualization manager) in the way how transmission is performed. The slice manager or transmission system instance manager may be comprised within a virtualization manager. It is noted that the term "slice" refers to an instance of a transmission system, in contrast to the previously mentioned article by Brik et al., where the same term is used with a different meaning, namely there the term slice refers to a secondary license.

This transmission instance configuration can comprise for example:
a. identities being used for different communication elements (e.g. nodes, service identifier) and/or protocol instances (e.g. service access points, socket names), and/or names of connectivity elements (e.g. flow/bearer identifier, locators) and/or
b. transmission protocols and/or mechanisms being used (in particular for radio transmission), such as, link layer protocols like radio link control, medium access control, error correction by automatic repeat request or hybrid automatic repeat request, ciphering and integrity protection algorithms, header compression schemes and protocols, channel coding schemes, advanced antenna usage schemes (e.g. MIMO, space-time-coding, beam forming, multilayer transmission), network layer protocols, transport layer protocols, cross-layer optimization techniques (e.g. joint source-channel coding, channel/resource adaptive transport layer congestion control), mobility management procedures and protocols (e.g. handover preparation, handover execution, data forwarding, context transfer), routing protocols (e.g. mesh-routing, MANET routing), power saving modes (e.g. discontinuous transmission and reception, idle mode, paging), quality-of-service management procedures and signaling protocols, relaying, network coding and/or
c. logical channels and transport channels that are used within the transmission instance and/or
d. control and management procedures and protocols, such as authentication, authorization, accounting, policy control, fault detection, performance monitoring, peering with external networks (including related business interface procedures) and/or
e. radio resource management procedures and protocols such as power control, link adaptation, adaptive coding and modulation, scheduling and resource allocation, quality-of-service insurance, congestion control, admission control, interference coordination, measurement control and radio resource control signaling.

It is noted that this list is by intention not exhaustive. One key point of the invention is that even new procedures - not yet developed at the time of the infrastructure build-out - can be configured for a transmission instance. This allows fast deployment of technical innovations. Different instances do not need to differ in all transmission procedures; they can in many cases be identical in most transmission procedures and differ in few (e.g. adaptive antenna usage, resource management and signaling, error recovery).

The transmission system instances are not only independent with respect to each other, they may also constitute distinct transmission systems towards users (i.e. mobile terminals), on account of the possibly different technical configuration of each transmission, system instance. In other words, the mobile terminals see physically different transmission systems, although they are provided by the same infrastructure. In this sense the "virtualization" is to be understood as relating to the management and structuring of the infrastructure resource, but not to the provision of communication services, as the transmission systems seen by mobile terminals are actually different, due to the different configuration,

The virtual instantiation of node functionality running on an actual infrastructure (e.g. a network node) may also be Called a virtual node (VN). Thus, the concept of the present invention provides for the possibility of having a plurality of virtual nodes generated by one actual node, and thereby when considering a plurality of actual nodes, distinct virtual networks consisting of virtual nodes provided by a common actual infrastructure.

Furthermore, the physical resources provided by the spectrum available for the communication system may be partitioned and allocated to the different transmission system instances (slices) according to the amount of resources that where requested at the instantiation of the transmission system slice. The allocation may be provided by a resource allocation control (RAC) function, which preferably also enforces that all instances (slices) obtain resources as negotiated with between the administrator of the slice (i.e. a system operator allowed to operate this slice or an entity that acts as administrator on behalf of the owner of the slice) and the slice manager. Thus, the transmission system instance manager may be arranged for independently and dynamically configuring the transmission system instances, where the resource allocation control function is also arranged for enforcing that each transmission system instance obtains resources as negotiated between the administrator of the transmission system instance and the transmission system instance manager. In order for a slice to use resources without being interfered by the usage of other resources by another slice, the access of slices to physical resources may be bound to a harmonized access resource scheme.

Examples of such a harmonized access resource scheme are listed below (note that several of these can be combined):
- a modulation scheme with orthogonal sub-carriers (e.g. OFDM, DMT), where every slice is bound to using this modulation scheme and the partitioning is achieved by allocating different sub-carriers to the different slices. It is noted that the term "orthogonal" refers to any two carriers sufficiently distinct such that there is no appreciable interference between them. This is e.g. the case if mathematically orthogonal signal waveforms are chosen, but equally if two frequencies are separated by a sufficient guard band. Allocating different sub-carriers to the different slices ensures interference free operation of slices according to the orthogonality of the modulation scheme; and/or
- a time scheduling scheme, which ensures that the different slices are transmitted in non-overlapping time slots. This requires alignment of time slots used in slices and the coordinated resource allocation is allocating slices to time slots;
   and/or
- a coded spectrum access scheme where signals are spread with CDMA spreading codes. Resource allocation is managed by assigning different slices to different spreading codes and thus using the orthogonality of the CDMA scheme.

### [Brief description of the drawings]

Embodiments of the present invention will now be described with reference to the Figures, in which
Fig. 1 shows a schematic representation of an infrastructure resource according to an embodiment of the invention;
Fig. 2 shows a schematic representation of a prior art network situation in which different spectrum buyers operate different communication systems;
Fig. 3a-3g show an example of an infrastructure resource instantiating a new transmission system instance and communicating with a system operator desiring to use the instance.
Fig. 4 shows a schematic example of interaction between a spectrum licensee (infrastructure provider) and system operator, for providing an appropriately configured communication network.
Fig. 5 shows a schematic representation of an infrastructure resource comprising a set of transmission system instances as well as appropriate control entities.
Fig. 6 shows a schematic representation of an infrastructure resource having a virtualized link layer.
Fig. 7 is a schematic representation of physical resource blocks in the three dimensions of time, frequency and code.
Fig. 8 shows a schematic representation of an example of the invention in which a wireless mesh network and a hierarchical mobile network are provided on a common infrastructure.
Fig. 9 shows a schematic representation of a transmission system instance manager.
Fig. 10 shows a schematic representation of a resource allocation controller.
Fig. 11 shows a flow chart of a method embodiment of the invention.
Fig. 12 shows a flow chart of another method embodiment of the invention.

### [Detailed description}

An embodiment of the invention may work as follows. An infrastructure operator (i.e. an operator who constructs and maintains the infrastructure for enabling wireless communication) obtains a spectrum usage rights (e.g. via a spectrum license) under the obligation to enable other communication service providers to provide communications services in the same spectrum (according to certain rules). This infrastructure operator provides a network infrastructure that enables communication services in the spectrum resource. The infrastructure supports that other providers (denoted as "system operators" herein, as they operate a transmission system on the shared infrastructure) can have access to the infrastructure via an interface (i.e. via a slice manager of an infrastructure node). Some negotiation process (e.g. a price setting process and a negotiation about the amount of resources and geographic distribution of resources) enables the system operator to obtain a certain share of spectrum resources from the infrastructure operator - this share is provided as a transmission instance administered by the system operator, and preferably the share is dynamically allocatable, i.e. the allocation may vary over time, e.g. depending on circumstances. The infrastructure resource can be such that each transmission system instance is independently administratable by a different transmission system operator.

It is noted that the infrastructure operator and at least one of the transmission system operators can be the same company or person. In other words, the present concept also lends itself to more efficiently operating different access networks (e.g. GSM and UMTS) by a given operator, who no longer needs to provide separate physical infastructures for this purpose.

The description refers sometimes to an instance of a transmission system which can be understood as an instantiation of a particular configuration of a transmission system (protocols, algorithms, identifiers, ...) that is running within one slice on a particular network node. The network node can contain multiple such instances of transmission systems which are running in different slices of the network node and share the same network node hardware/software without being aware of the existence of other slices (instances).

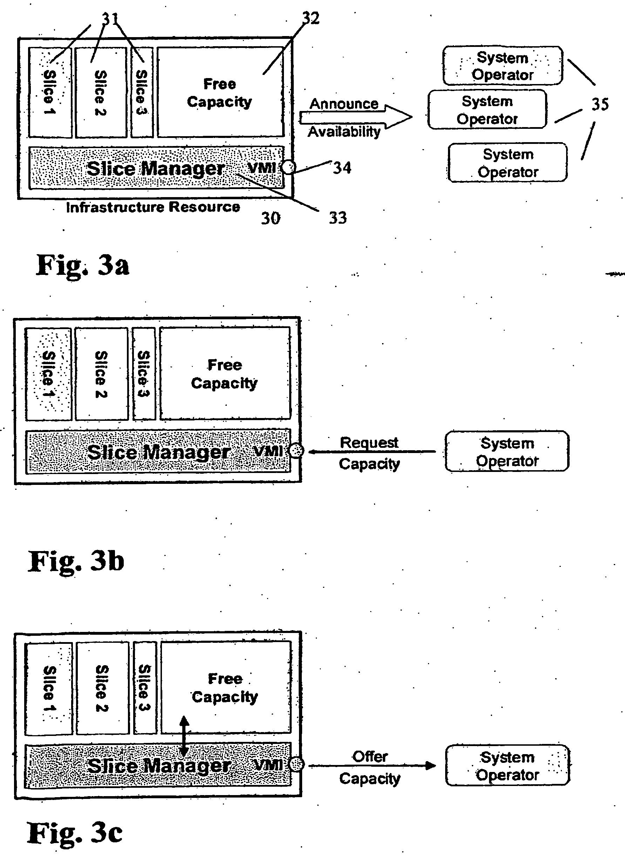

The interaction between system operator and infrastructure resource may be as follows. The infrastructure owner owns an infrastructure resource that has free capacity available. In addition, it may or may not have some slices instantiated already. In the following example given in Figures 3a to 3g, the infrastructure 30 resource has three slices 31 already that are being used by some system operator 35, but also still has free capacity 32 available. The infrastructure owner now announces the availability of the resource to system operators 35. This could e.g. consist of putting up an offer in a public infrastructure trading exchange. The announcement may or may not include information about the amount of free capacity (the infrastructure owner may not want to publicly disclose it). The announcement can e.g. contain the address of a resource's virtualization management interface (VMI) indicated as 34.

As shown in Fig. 3b, one of the system operators 35 is interested in the infrastructure resource. He connects to the slice manager 33 using the VMI address from the announcement and requests a slice with desired properties and a desired capacity.

As shown in Fig. 3c, the slice manager 33 of the infrastructure resource 30 checks whether the request can be fulfilled from the available free capacity 32 and optionally considers additional policies (e.g. certain system operators may be excluded from using the resource). If the outcome is positive, the slice manager 33 offers a slice with a specific capacity (which may or may not be identical to the system operator's requested capacity). In addition, the offer may contain other information such as cost and billing details.

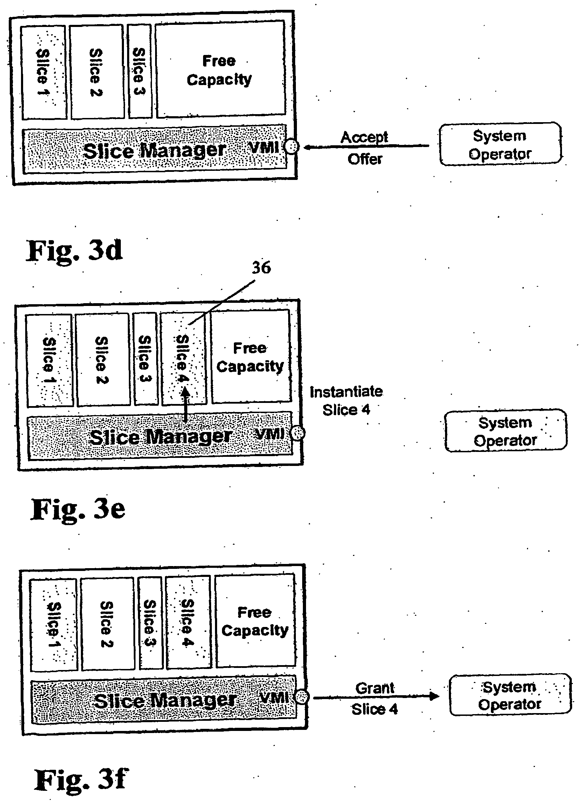

As shown in Fig. 3d, in case the offer is acceptable to the system operator, he sends an accept message to the slice manager. Optionally, there may be additional negotiation steps.

As shown in Fig. 3e, the slice manager 33 now instantiates a new slice 36 (instance of a transmission system) and allocates the negotiated part of the free capacity to it.

As shown in Fig. 3f, upon successful instantiation, the slice manager 33 grants access to the new slice 36 to the system operator. The grant message includes an identifier (e.g. a port number) that enables the system operator to address this specific slice in the future. The system operator now has full access to the newly instantiated slice 36. By means of virtualization, he now owns a share of the resource and has full control over that share.

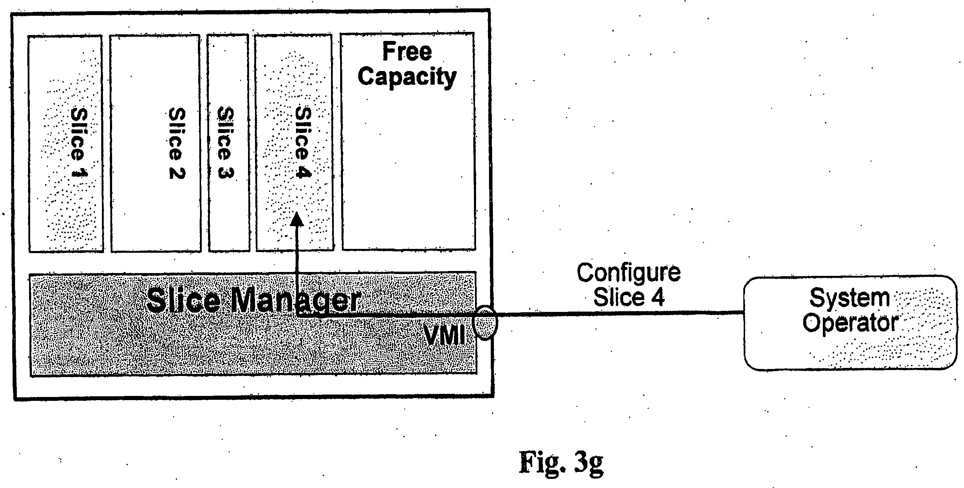

Finally, as shown in Fig. 3g, the system operator configures the slice 36 to his liking. This includes e.g. installing custom protocols and state information, as described further on.

Thus, the following scenario becomes possible using the concept of the present invention. A spectrum licensee, who has access right to a defined part of a spectrum and/or to certain physical resources builds wireless communication infrastructure, thereby becoming an infrastructure operator. The infrastructure operator then provides access to the infrastructure and at least parts of the spectrum/physical resources to system operators, possibly due to e.g. a legal obligation. The wireless communication infrastructure is configurable with respect to a set of configuration parameters (where said set may be changed in time, e.g. due to new technologies implemented in the infrastructure, thereby possibly adding new configuration parameters), and the system operators can then configure their transmission system instances within the possibilities of the set of configuration parameters.

The system operators may install components for the system, allowing individual configuration of transmission modes (protocols, resource management,...). Based on virtualisation, this allows innovation of new technologies and competition between system operators. Multiple concurrent systems (operated by different system operators) may share the same infrastructure, which leads to infrastructure sharing for cost efficiency. The spectrum licensee (infrastructure operator) may (dynamically) provide system resources to system operators, where the share per system operator may depend on negotiation between system operator and licensee. Furthermore, the spectrum licensee may enforce spectrum usage, as he controls the dynamic spectrum allocation (e.g. by scheduling), which leads to efficient / simple spectrum usage enforcement.

Via a configuration interface (e.g. provided by the slice manager) the system operator can configure the network elements of the infrastructure provider. The system operator can determine how the transmission system instance that he has obtained is configured; i.e, the transmission protocols, the object identifiers, the control and management functions and protocols, etc.

Once the transmission system has been configured in at least one node of the infrastructure, the transmission system can be used. For users of one instance (slice) of the transmission system, the system operator is perceived as the administrative entity of the system, even if the infrastructure belongs to the infrastructure provider.

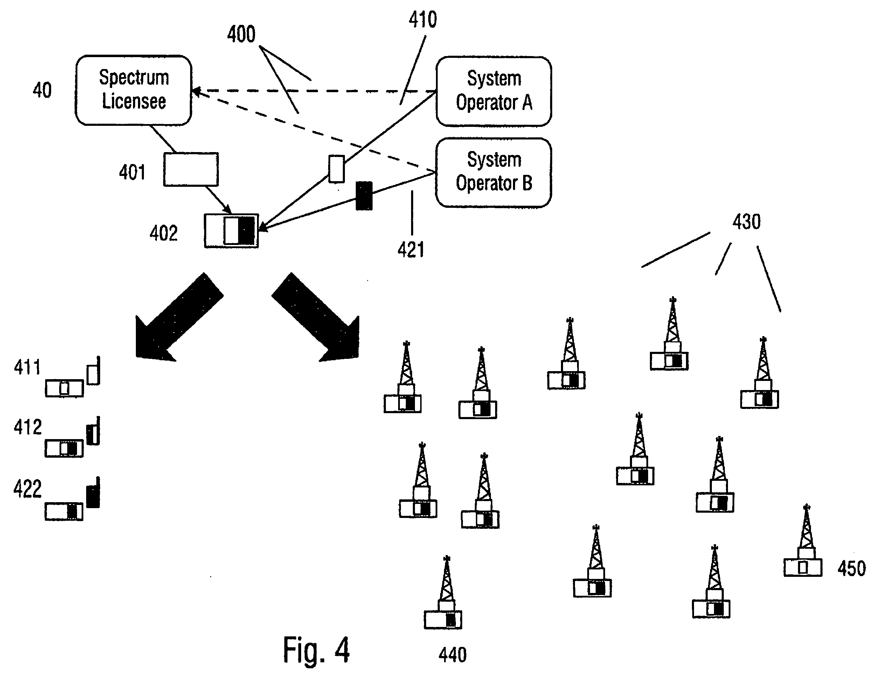

System configuration can be done such that different transmission system functionality is provided via virtualisation and minimal coordination between systems is required for compatibility (e.g. modulation). The configuration can be done via a visualisation management interface. An example is shown in Fig. 4. A spectrum licensee 40 provides an infrastructure resource 401 (such as one or more nodes of a wireless communication network). Based on negotiations 400 with a system operator A 41 and system operator B 42, spectrum licensee 40 instantiates transmission system instances for system operators A and B in infrastructure resource 401, which are then configured in accordance with specifications 410, 421 provided by system operators A and B, respectively. The result is a configured infrastructure resource 402.

As shown at the bottom of Fig. 4, different nodes can be arranged differently, e.g. nodes 430 carry transmission system instances for both system operator A and B, while e.g. node 440 only has an instance for system operator B, and node 450 only has an instance for system operator A. Mobile terminals may be correspondingly arranged, e.g. terminals 411 for operation with system operator A, terminals 422 for operation with system operator B, and terminals 412 for operation with both system operators A and B.

Specifically, the system configuration can be such that transmission in each sub-system (system operator) can differ significantly in terms of one or more of
- addressing, identifiers, locators,
- MAC/RLC protocols, network/transport protocols, etc..
- routing and mobility management schemes and protocols, and
- resources management schemes (scheduling, power control, channel codes, antenna usage, FDD, TDD usage, channel measurements/estimation, ...).

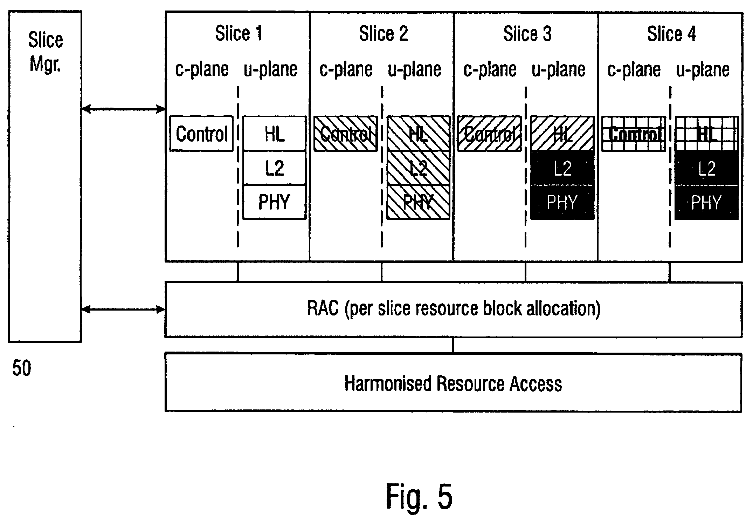

Fig. 5 shows a schematic example of the structure of an infrastructure resource such as one of the nodes 430, 440 or 450 shown in Fig. 4. A slice manager or transmission system instance manager 50 is provided, for managing the instantiation, configuration and maintenance of a number of slices 1 to 4. Equally, a Resource Allocation Controller 51 is provided for performing a per slice resource block allocation of available physical resources. Also, a function 52 for harmonized resource access for avoiding any conflicts and interference in the use of the physical resources. The function 52 can be separate from or can also be a part of the controller 51. As indicated in Fig. 5, the configuration of transmission methods can span over a wide range of functionality from the physical layer up to higher layer functions and control functions.

Each slice 1 to 4 has the full functionality of a transmission system, with appropriate control, plane and user plane, and with the corresponding protocol hierarchy. Thus, each slice runs like an independent transmission system as if it were the only transmission system on the given infrastructure, like in known systems in which infrastructure and transmission system are not separated by means of the virtualization concept of the present invention.

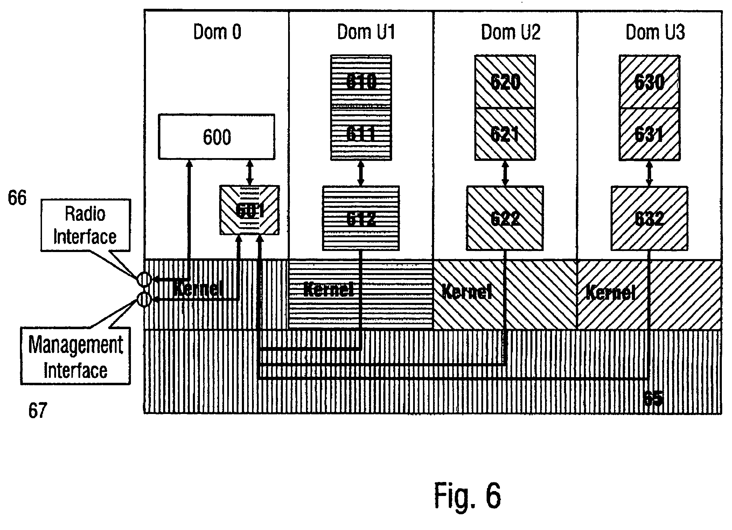

A more detailed example is schematically shown in Fig. 6 which is based on the XEN virtualization architecture. Three transmission system instances (realized as so-called XEN guest domains Dom U) Dom U1, Dom U2 and Dom U3 are shown, each having a protocol stack comprising an RLC (Radio Link Control) layer, MAC (Media Access Control) layer and a virtual MAC-r (the resource control, part of MAC) interface, respectively denoted 610, 611, 612 for Dom U1, 620, 621, 622 for Dom U2 and 630, 631, 632 for Dom U3. Each instance runs on its own kernel, provided over a virtualized link layer 65, which connects the kernels to the media access control functions for the actual infrastructure resource, e.g. node, namely MAC-v (virutalization medium access control) 601 and MAC-r 600, which in turn communicate with the radio interface 66 via a network interface card and management interface 67 for the configuration of the domains. The virtualized link layer 65 may e.g. be provided with the help of the known XEN system, for example as a so-called XEN Hypervisor. The XEN host domain Dom 0 is the privileged domain that has direct access to hardware and interface cards; guest domains Dom U can access hardware and interfaces only via the host domain.

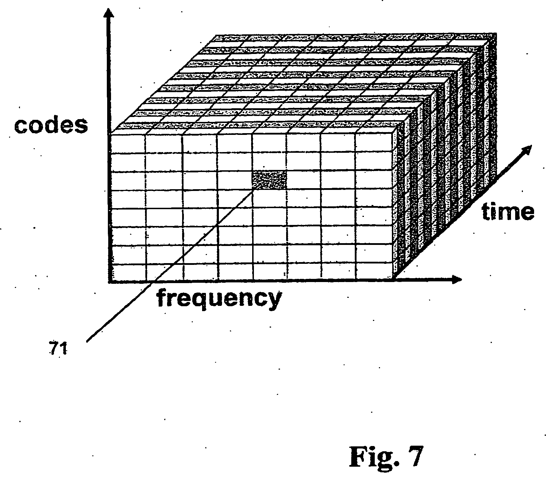

Returning now to the example of Fig. 5, the access to physical resources is provided by a resource allocation control (RAC) function 51. It allocates resources to every slice. An example of physical resources for transmission are depicted schematically in figure 7. Resource blocks 71 can generally be identified by their coordinates in the three dimensions frequency (subcarrier), time (time slot) and code. A difference to multiple access schemes used in today's wireless networks is that radio resource blocks are allocated to virtual radio networks rather than to individual users. The multiple access between different users of the same virtual radio network are handled separately within each virtual radio network and within the resources that have been allocated to the particular virtual radio network.

Different types of access technologies can be described by this resource model. For example, for UMTS/WCDMA there is only one subcarrier, with the two remaining dimensions (time/code). For OFDMA systems (WiMAX, LTE) there is only one code, with remaining dimensions (time/frequency). These dimensions allow partitioning of the resources in a TDMA (time), FDMA (frequency) or CDMA (code) dimensions. A fourth dimension that is not depicted in the diagram is a spatial dimension, when resources of the same physical resource block can be further subdivided into several independent spatial data streams. This can be achieved by multi-antenna techniques. This provides a fourth dimension for resource reservation based on SDMA (space).

Thus the physical resources may generally comprise at least one of a code ressource, a time resource, a frequency resource, and a space resource. Code resources, time resources and frequency resources may be understood as spectrum resources.

The RAC allows multiple separate radio access technologies (provided in different slices) to use a common frequency band (resource) in a centralized-cooperative and compatible way with minimal interference between slices. To ensure that little interference occurs between slices, a harmonized resource access function 52 is preferable for the transmission system in every slice (examples have already been listed above). This also means that each virtual radio network (i.e. the collection of virtual nodes or transmission system instances associated with the same system operator, configured in the same way and using the same allocated physical resources) have a common compatible portioning of radio resources into resource blocks according to Fig. 7.

There are different options on which physical resources can be used (allocated) for the transmission system of one slice. This can be e.g. negotiated at the slice instantiation between the system operator and the slice manager. It can be configured that a slice receives certain well-defined resources in the resource space, e.g. frequency subcarriers a,b,c,d in a certain time pattern. This means that the resource blocks for the slice are pre-defined. Another option is that a certain amount of total resources has been negotiated for a particular slice; the resource allocation control function determines dynamically (e.g. based on resources allocated to other slices and channel characteristics) which resource blocks are allocated to which slice. A signaling mechanism of the resource allocation control and the transmission system of the slice is then required, so that the transmission system can learn when and which resource blocks are allocated to it.

System usage can thus be such that resources are shared dynamically in the system under control of the virtualisation framework (RAC) of the spectrum licensee. This includes allocation of resource blocks to subsystems (i.e. system operators) e.g. in the spectrum domain (sub-carrier) and/or time domain (slots) and/or signal domain (codes) and/or space domain (antennas/spatial layers). It furthermore includes coordination via common coordination channel and enforcement of negotiated resource share. The control process can be adapted to dynamic channel conditions, which leads to a more efficient usage of wireless spectrum. It is noted that the access system(s) can put some restrictions on dynamicity, e.g. request to have static frequency sub-carriers for some time, request for certain structure of sub-carriers, etc.

Configurable functionality of a virtual radio node (transmission system instance/slice) can comprise physical layer procedures, such as channel coding, smart antenna management (MIMO, beamforming) or cooperative relaying; it can be link layer functionality, like (hybrid) automatic repeat request (ARQ), space division multiple access (SDMA), header compression schemes, or ciphering; or it can be higher layer functionality such as end-to-end naming schemes, inter-domain gatewaying and routing, network coding and multi-path-routing, network storage, caching, congestion control proxying, application layer adaptation. Apart from data-plane functionality also control functions can be configured per virtual radio node, for example local routing and mobility management (incl. mesh and ad-hoc routing, mobility management optimization and context transfer), radio-resource management and scheduling (within the virtual radio), cross-layer design and optimization, authentication and authorization schemes, as well as battery-saving schemes like discontinuous transmission/reception and sleep modes.

There are different ways for a virtual network operator to program/configure and instantiate such functionality on a virtual node. A physical node can have a library of basic functional units; the virtual network operator can then compose the desired functionality by combining functional units - possibly allowing some user-defined extensions inherited from base functional units. A difficulty is that certain functions have high processing requirements and may require support by dedicated hardware (e.g. ciphering or MIMO). In this case only a limited set of configurable algorithms or procedures can be provided by the physical node, putting some limitation on the degree of configurability. Another approach is to make the virtual node freely programmable and a virtual network operator installs the desired software code. To support specific tasks different types of programmable processing entities can be provided by the physical node, ranging from general purpose processors to configurable logic like Field Programmable Gate Arrays (FPGAs).

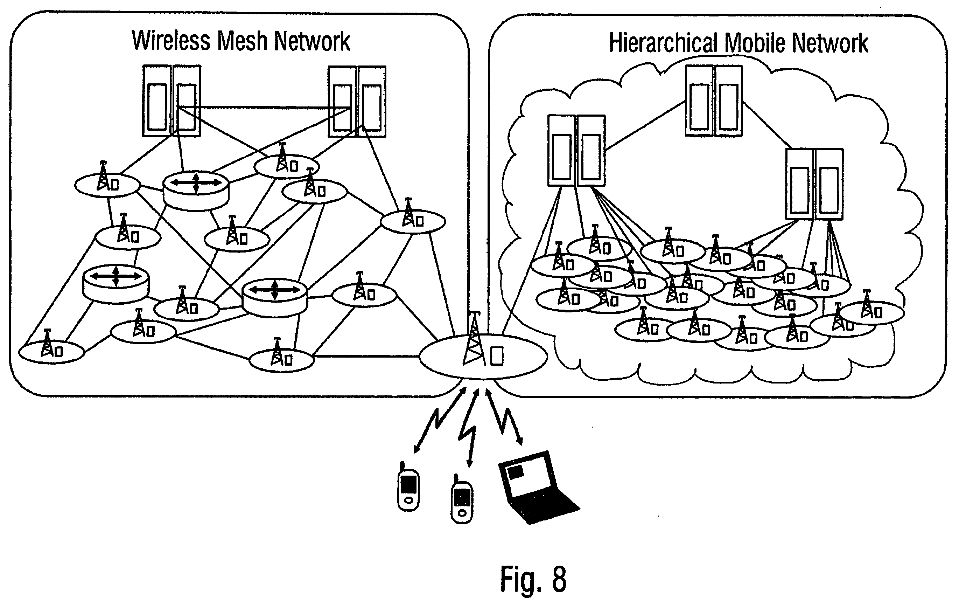

The inventive approach allows radio access technologies (radio cells) to become logically part of different (wireless) network architectures. Figure 8 shows an example, where a radio cell is partitioned into two slices. One slice is seen as a radio cell in a hierarchical mobile network, the other slice as a radio cell in a wireless mesh network. Both control plane and user plane between the different slices exist.

The two transmission system instances running on the same infrastructure can be configured very differently, for example:
For the hierarchical mobile network,
   - mobility protocols can be used (like MIP, GTP, PMIP, NETLMM, ...).
   - Security can be based on a fixed AAA infrastructure with authentication based on pre-established security credentials or a PKI infrastructure.
   - User plane protocols and procedures as standardized by standardization forums can be used.

For the hierarchical mobile network,
- Mesh/ad-hoc routing protocols can be used, like reactive or proactive MANET protocols (at IP routing level), or link layer routing protocols (e.g. 802.11s, 802.15.5, 802.16,....).
- Security can be based on opportunistic security with self-generated keys and micro-payment.
- User plane protocols and procedures can be proprietary.

The disclosed concept of Virtual Radio enables different technology development cycles and new business models. The physical access to the spectrum - and the associated network infrastructure - can be used for a long time and can be provided by a separate infrastructure provider.

The transmission procedures and/or protocols for data transmission and management and control of data transmission is provided within slices at a different (faster) development cycle, and can be provided by different operators, like wireless virtualized network operators (system operators).

The basic concept of decoupling the basic infrastructure from the special configuration of the transmission system by instantiating different instances on the common infrastructure affords the advantage of decoupling the life cycles of long-term (static) frequency assignment (by licensing) and usage etiquette (modulation, power profiles, etc.) from short- or mid-term (dynamic and flexible) radio system usage (networking, applications, radio resource management (RRM) by virtualization. This enables new business models, such as creating the roles of infrastructure providers on the one hand who have long-term frequency/spectrum/resource licenses and provide infrastructure, and on the other hand of wireless virtualized network operators who lease slice-capacity from infrastructure providers and perform customized wireless network design. It becomes possible to apply the DSL-market business model to wireless communication. Furthermore, it becomes possible to migrate from the current access approach (Long Therm Evolution, LTE), instead of having to take a clean-slate approach like with Cognitive Radio.

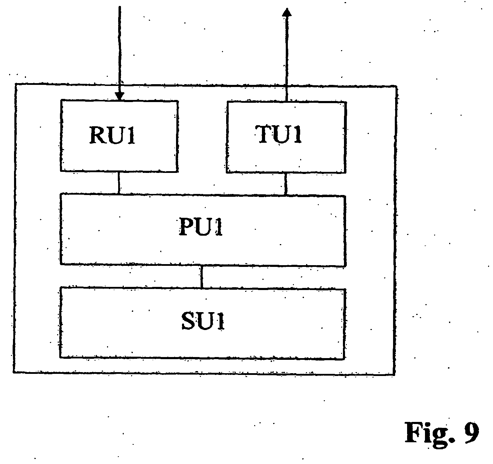

The present invention can also be embodied as a transmission instance manager or slice manager for an infrastructure resource of a wireless communication system, the infrastructure resource being controllable to simultaneously provide different transmission system instances, wherein the transmission instance manager is arranged to configure each transmission system instance independently and dynamically. Figure 9 depicts an example of such a slice manager. The exemplary slice manager comprises a receiving unit RU1 for receiving messages, a processing unit PU1 for processing messages and information, a transmission unit TU1 for sending messages, and preferably a storage unit SU1 for storing and retrieving information. The transmission instance manager preferably comprises a virtualization management interface for connecting system operators to the infrastructure resource.

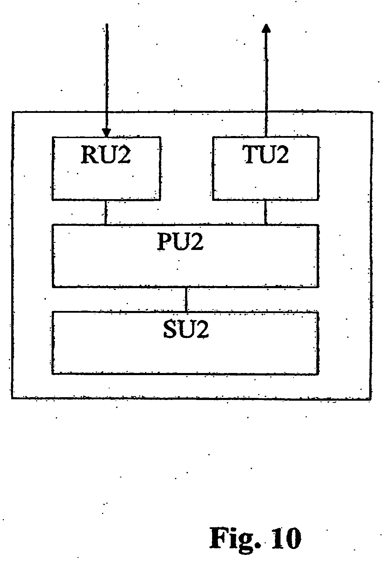

The present invention can furthermore be embodied as a resource allocation controller for an infrastructure resource of a wireless communication system, the infrastructure resource being controllable to simultaneously provide different transmission system instances, wherein the resource allocation controller is arranged for allocating physical resources of the wireless communication system such that each transmission system instance has a certain share of the physical resources. Figure 10 depicts an example of such a radio resource allocation controller. The exemplary radio resource allocation controller comprises a receiving unit RU2 for receiving messages, a processing unit PU2 for processing messages and information, a transmission unit TU2 for sending messages, and preferably a storage unit SU2 for storing and retrieving information. Information useful for allocation of physical resources can be received via the receiving unit R02. Information for monitoring already allocated physical resources may be received via the receiving unit RU2. Decisions for allocation (including re-allocation) of physical resources may be taken by the processing unit PU2 that may then initiate messages to be sent to the infrastructure resource via the transmission unit TU2. Information for taking allocation decisions is preferably received via the receiving unit RU2 as described. Furthermore, such information may be obtained from the storage unit SU2.

Preferably, the resource allocation controller is furthermore arranged for enforcing that each transmission system instance obtains resources as negotiated with an administrator of the transmission system instance. Also, the resource allocation controller may be arranged such that the share of physical resources of each transmission system instance is dynamically allocatable. Furthermore, as previously described, the resource allocation controller may implement a harmonized access resource scheme for the access of the transmission system instances to the physical resources, the harmonized access resource scheme comprising one or more of a modulation scheme with orthogonal sub-carriers, a time scheduling scheme and a coded spectrum access scheme.

The present invention can also be embodied in the form of a method, especially a computer implemented method, and therefore also relates to computer programs comprising portions of software code in order to implement the methods as described when executed in an infrastructure resource, in a slice manager or in a Resource Allocation Controller RAC. The respective computer programs can be stored on one or more computer readable media. A computer-readable medium can be a permanent or rewritable memory within a slice manager or a RAC, or located externally. The respective computer programs can be also transferred to the respective entities for example via a cable or a wireless link as a sequence of signals.

A method embodiment of the invention for controlling an infrastructure resource for a wireless communication system comprises simultaneously providing different transmission system instances, each transmission system instance being independently and dynamically configurable. This method can be embodied as a computer program and as a computer program product carrying the computer program.

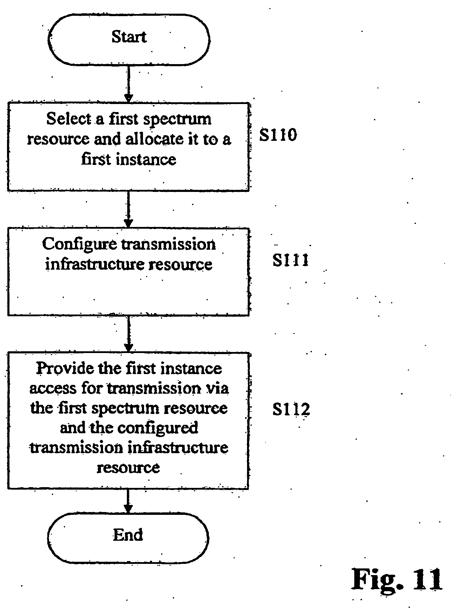

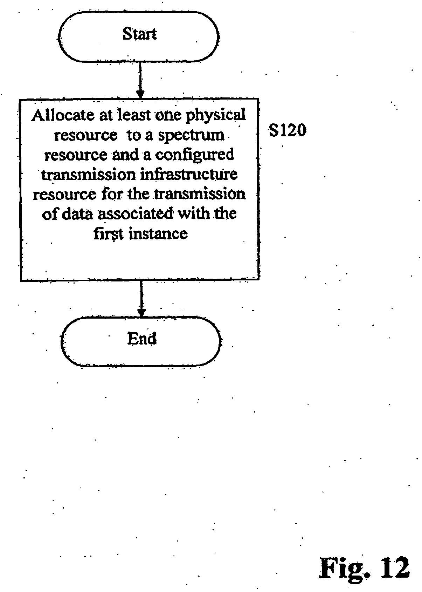

Further method embodiments of the invention will now be described with reference to Fig. 11 and 12. It is noted that in connection with these methods mention is made of a first (and second, third, ...) instance. The first instance is in this case not to be confused with the transmission system instance, but is to be understood as generically describing any entity capable of using a slice or transmission system instance. Thus, the first instance can e.g. be a communication service provider, such as a system operator.

The method of Fig. 11 is arranged for providing communication service in a wireless communication system that provides a spectrum resource (i.e. a set of physical resources) and a transmission infrastructure resource (one or more nodes) for transmission of data. In step S110 a first spectrum resource (e.g. a sub-set of the physical resources) is selected from the spectrum resource and the first spectrum resource is allocated to a first instance. Then the procedure continues in step S111 by configuring the transmission infrastructure resource to be capable of transmitting data associated with the first instance via the first spectrum resource. Finally, in step S112 the first instance is provided access for transmission of data associated with the first instance via the first spectrum resource and the configured transmission infrastructure resource.

More than only the first spectrum resource, e.g. a second spectrum resource, can be selected from the spectrum resource and allocated to the first instance. The transmission infrastructure can then be configured accordingly, i.e. to be capable of transmitting data associated with the first instance via the second spectrum resource. Then, access can be provided to the first instance for transmission of data associated with the first instance via the second spectrum resource and the accordingly configured transmission infrastructure resource. Data associated with the first instance may be sent via the first spectrum resource and the configured transmission infrastructure resource and via the second spectrum resource and the accordingly configured transmission infrastructure resource, e.g. parallel in time but preferably without interfering.

Additionally or alternatively, further transmission system instances can be instantiated and associated with a corresponding part of the overall spectrum resource, e.g. a second spectrum resource can be selected from the spectrum resource and allocated to a second instance (e.g. a second system operator). The transmission infrastructure can then be configured accordingly, i.e. to be capable of transmitting data associated with the second instance via the second spectrum resource. Then, access can be provided to the second instance for transmission of data associated with the second instance via the second spectrum resource and the accordingly configured transmission infrastructure resource. Data associated with the first instance may be sent via the first spectrum resource and the configured transmission infrastructure resource and data associated with the second instance may be sent via the second spectrum resource and the accordingly configured transmission infrastructure resource, e.g. parallel in time but preferably without interfering.

The first (or second, third, etc.) spectrum resource and the configured transmission infrastructure resource constitute a respective slice, i.e. they provide the basis for instantiating a respective transmission system instance.

As described previously, the first (or second, third, etc.) spectrum resource may be selected according to a specification of the respective instance, i.e. a specification can e.g. be provided as a part of a request from system operator (see e.g. discussion of Fig. 3b). Thus the method embodiment may comprise the step of receiving at least one message comprising the specification. Preferably, the specification is negotiatable.

The first spectrum resource and the configured transmission infrastructure resource may be associated with at least one identifier. Preferably, each part of the overall spectrum resource allocate to a respective transmission system instance is associated with a corresponding identifier. The method of the embodiment may comprise the step of sending the at least one identifier (or at least one indication thereof) to the first instance, and equally the sending of each respective identifier to the corresponding instance.

The configuration step further may comprise at least one of the steps of
- selecting at least one identity from a group of identities comprising at least one of an identifier of a communication element of the transmission infrastructure resource, an identifier of a protocol instance of the transmission infrastructure resource, and an identifier of a connectivity element of the transmission infrastructure resource,
- defining at leased one transmission protocol and/or at least one transmission mechanism for the data transmission,
- defining at least one channel for the data transmission,
- defining at least one control procedure, control protocol, management procedure and/or management protocol, and
- defining at least one radio resource management procedure and/or protocol.

The method may be such that the spectrum resource comprises at least one of a code resource, a time resource, and a frequency resource being selectable.

The first instance may be a communication service provider, i.e. the instantiated transmission instance is fixedly associated with a given service provider, who thereby effectively becomes a system operator, although he does not have to have any infrastructure resources of his own.

The method steps can be implemented in any suitable or desirable way within the infrastructure resource, and at least one of the steps can e.g. be performed by the previously described slice manager/transmission system instance manager.

Another method embodiment will now be described with reference to Fig. 12, where this concerns the allocation of resources and is thus preferably performed in the Resource Allocation Controller (RAC) or Resource Allocation Control function, which may be implemented within the RAC. A wireless communication system provides a spectrum resource and a transmission infrastructure resource for transmission of data, and the transmission infrastructure resource is configured to be capable of transmitting data associated with a first instance via a first spectrum resource being selected from the (overall) spectrum resource and allocated to the first instance. The method comprises the step S120 of allocating at least one physical resource (e.g. one of more physical resource blocks as shown in Fig. 7) to the first spectrum resource and the configured transmission infrastructure resource for the transmission of the data associated with the first instance. In other words, in accordance with the logical allocation of the spectrum resource and the first instance (e.g. a system operator), a physical allocation of physical resources to the defined spectrum resource and configured transmission infrastructure resource (i.e. slice) is performed. Thus physical resources are allocated to a transmission system instance, which is associated with a particular entity or first instance, such as a give system operator, such that the particular entity in then control of communications via that transmission system instance.

The first spectrum resource and the configured transmission infrastructure resource may thus constitute a slice, i.e. they provide the basis for instantiating a respective transmission system instance.

The allocation is preferably according to a harmonized access resource scheme. Furthermore, the presently described method relating to allocating resources preferably comprises the step of enforcing that the data transmission for the first instance is according to the allocated physical resource block and the configured transmission infrastructure resource.

The invention may be further embodied according 10 the following examples which can fully or in part combined with the features of previously described embodiments and any of the claimed concepts.
- A wireless communication system that provides access to radio spectrum for data transmission, characterized in managing access to the spectrum for data sessions of.at least one slice, where a slice provides procedures for data transmission and/or control and management for such data transmission.
- Slices can have different procedures for data transmission and/or control and management for such data transmission. (partly different or completely different) Slices can be reconfigured.
- Slices can be provided by different administrative entities / operators
- Managing access defines the proportion of spectrum that is provided to different slices.
- These can be dynamically updated (e.g. via the slice manager)
- Unused resources of one slice can be temporarily provided to other slices
- Slices can be provided with measurement information (or measurement opportunities in a definable pattern) about the characteristics of the spectrum.
- Slices can be provided with control signaling opportunities (e.g. beacons)
- Resources for slices can be re-assigned according to meta-policies, e.g. a slice that contains disaster recovery or public safety communication procedures can be provided with more resources during emergency events.
- Resources for slices can be provided according to a business interface where usage of resources and associated costs are negotiated.

Embodiments of the invention can thus provide a framework for coordinated sharing of wireless resources and infrastructure among multiple virtual networks. Furthermore, flexibility and evolvability may be provided by enabling the simultaneous use of multiple optimized link-layers for diverse applications on top of the same resource.

This may enable:
- Faster deployment of new advanced communications methods in wireless systems and less dependency on standardized solutions.
- An alternative approach to cognitive radio for flexible spectrum usage, with better technical capabilities. It is less disruptive, assures more predictable system behavior and is simpler.
- New business models for infrastructure models that can innovate the usage of wireless communication
- Better refuse of wireless networking infrastructure for new deployment of new technical features. Thus a cost-advantage compared to new infrastructure investments can be achieved.
- Good support for infrastructure sharing between different access providers, thus making better use of the financial investment required for wireless infrastructure.

A comparison of the Virtual Radio (VR) concept with the Cognitive Radio (CR) concept shows the following. In VR resource portioning can be centralized (e.g. due to the central coordination provided by the RAC for all of the transmission system instances on the infrastructure resource), like for centralized scheduling. In CR resource portioning is distributed, like carrier-sense multiple access (CSMA). In VR, a resource provider (infrastructure provider) distributes resources to wireless operators (transmission providers), whereas in CR wireless operators share resources, which leads to problems in etiquette enforcement. While VR operates with specific radio, in which only upper (software) parts need to be configurable, CR requires software-reconfigurable radio, which adds hardware complexity leading to more costly nodes and terminals. In terms of expected efficiency, VR allows efficient resource sharing and is predictable due to admission of new slices, whereas CR creates considerable overhead for distributed spectrum sharing and is unpredictable due to an unknown number of systems targeting a given spectrum resource. Finally, in terms of terminal complexity, terminals in VR can already operate even if they only support one slice (one technology), whereas CR terminals need to support the full CR flexibility.

The introduction of radio network virtualization can revolutionize the evolution and usage of wireless networks. It enables an acceleration of the innovation cycles of wireless transmission concepts and eases extensibility and evolution of wireless networks. It allows for infrastructure sharing, which may allow reducing network deployment costs and thus also the price per transmitted bit. Further, it allows customization and pluralism of networks: a virtual radio network targeted at machine-to-machine or sensor applications can be adapted to these applications and requirements, while at the same time another virtual radio network is optimized for providing Internet services to mobile users. The flexibility of virtualization provides a means for migration from one network design to another. For the new design a new virtual network is created in parallel to the old design. Initially (e.g. when few end users own devices that support the new design) a small amount of resources is allocated to the virtual network of the new design; at a later phase few resources are allocated to the virtual network of the old design, before it is eventually deleted. Similarly, virtual networks can be used for experimentation of new radio networks designs, running on real infrastructure yet isolated from other operational virtual networks, and limited in stope but still affordable due to reuse of existing infrastructure.

Apart from technical merits, network virtualization can lead to new business roles by separating the operation of the physical infrastructure from the operation of the networking service. This decouples the life cycles of infrastructure build-out and network service deployment; on a given infrastructure a larger variety of customized networks can be provided (limited only by the capabilities of the physical nodes and links). For example, the build-out of physical infrastructure determines what amount of networking capacity is available at different regions. In an open market situation with separate infrastructure and virtual network providers, infrastructure build-out will only happen where virtual network operators foresee a significant demand and request infrastructure availability. This may lead to regions (like rural areas) where it is economically unfeasible to provide network capacity and networking services. The provision of network infrastructure could then still be provided, e.g. due to a political objective to reduce the digital divide; infrastructure could, for example, be subsidized with taxes or it could even be state-owned. Competition between virtual network operators could then happen on the basis of the provided networking service.

The invention has been described with reference to specific embodiments that serve the purpose of better understanding the invention, but which are not intended to be limiting in any way, as the invention is defined by the appended claims.

## Claims

1. A base station of a wireless communication system, said base station (10, 30) being arranged to simultaneously provide different transmission system instances (11-14, 31) as a plurality of software-implemented virtual base station, each transmission system instance (11-14, 31) being independently and dynamically configurable, and each transmission system instance (11-14, 31) providing a functionality with a control plane, a user plane, and a corresponding protocol hierarchy, the base station further comprising a manager configured tao instantiate a new virtual base station and to provide full control over the instantiated virtual base stations to different communication service providers.

2. The base station of claim 1, wherein each transmission system instance (11-14) has associated a share of physical resources provided by said wireless communication system.

3. The base station according claim 2, wherein the physical resources comprise at least one of a code resource, a time resource, a frequency resource, and a space resource.

4. The base station of claim 2 or 3, wherein said share is dynamically allocatable.

5. The base station of one of claims 2 to 4, comprising a resource allocation control function for allocating said physical resources to said transmission system instances (11-14, 31).

6. The base station of one of claims 1 to 5, wherein said resource allocation control function is also arranged for enforcing that each transmission system instance (11-14, 31) obtains resources as negotiated between an administrator of said transmission system instance (11-14, 31) and said transmission system instance manager (15, 33).

7. The base station of one of claims 2 to 6, wherein said transmission system instances (11-14, 31) access said physical resources according to a harmonized access resource scheme reducing interference amongst said transmission system instances (11-14, 31), said harmonized access resource scheme comprising one or more of a modulation scheme with orthogonal sub-carriers, a time scheduling scheme and a coded spectrum access scheme.

8. The base station of one of claims 1 to 7, wherein said different transmission system instances (11-14, 31) provide separate radio access technologies.

9. The base station of one of claims 1 to 8, wherein each transmission system instance (11-14, 31) is independently and dynamically configurable in terms of one or more of:
selecting at least one identity from a group of identities comprising at least one of an identifier of a communication element of the infrastructure resource (10, 30), an identifier of a protocol instance of the infrastructure resource (10, 30), and an identifier of a connectivity element of the infrastructure resource (10, 30),
defining at least one transmission protocol and/or at least one transmission mechanism for a data transmission,
defining at least one channel for the data transmission,
defining at least one control procedure, control protocol, management procedure and/or management protocol,
defining at least one radio resource management procedure and/or protocol.

10. A method of operating a base station (10, 30) of a wireless communication system, comprising:
a step of simultaneously providing different transmission system instances (11-14, 31) as a plurality of software-implemented virtual base station, each transmission system instance (11-14, 31) being independently and dynamically configurable, and each transmission system instance (11-14, 31) providing a functionality with a control plane, a user plane, and a corresponding protocol hierarchy, and
a step of, by a manager of the base station, instantiating a new virtual base station and providing full control over the instantiated virtual base stations to different communication service providers.

## Patentansprüche

1. Basisstation eines Drahtloskommunikationssystems, wobei die Basisstation (10, 30) eingerichtet ist zum simultanen Bereitstellen verschiedener Sendesysteminstanzen (11-14, 31) als eine Vielzahl von software-implementierten virtuellen Basisstationen, wobei jede Sendesysteminstanz (11-14, 31) unabhängig und dynamisch konfigurierbar ist und wobei jede Sendesysteminstanz (11-14, 31) eine Funktionalität mit einer Steuerebene, einer Benutzerebene und einer entsprechenden Protokollhierarchie bereitstellt, wobei die Basisstation weiterhin eine Verwaltungseinheit umfasst, die eingerichtet ist zum Instanziieren einer neuen virtuellen Basisstation und zum Bereitstellen einer vollständigen Kontrolle über die instanziierten virtuellen Basisstationen für verschiedene Kommunikationsdienstleister.

2. Basisstation nach Anspruch 1, wobei jede Sendesysteminstanz (11-14) einen Teil physikalischer Ressourcen, die von dem Drahtloskommunikationssystem bereitgestellt werden, assoziiert hat.

3. Basisstation nach Anspruch 2, wobei die physikalischen Ressourcen eine Code-Ressource, eine Zeit-Ressource, eine Frequenz-Ressource und/oder eine Raum-Ressource umfasst.

4. Basisstation nach Anspruch 2 oder 3, wobei der Teil dynamisch zuweisbar ist.

5. Basisstation nach einem der Ansprüche 2-4, umfassend eine Ressourcenzuweisung-Steuerfunktion zum Zuweisen der physikalischen Ressourcen für die Sendesysteminstanzen (11-14, 31).

6. Basisstation nach einem der Ansprüche 1-5, wobei die Ressourcenzuweisung-Steuerfunktion auch eingerichtet ist zum Erzwingen, dass jede Sendesysteminstanz (11-14, 31) Ressourcen erhält wie zwischen einem Administrator der Sendesysteminstanz (11-14, 31) und der Sendesysteminstanz-Verwaltungseinheit (15, 33) ausgehandelt.

7. Basisstation nach einem der Ansprüche 2-6, wobei die Sendesysteminstanzen (11-14, 31) auf die physikalischen Ressourcen entsprechend einem harmonisierten Zugriffsressourcenschema zugreifen, das Interferenz unter den Sendesysteminstanzen (11-14, 31) reduziert, wobei das harmonisierte Zugriffsressourcenschema eines oder mehr umfasst von einem Modulationsschema mit orthogonalen Subträgern, einem Zeitplanungsschema und einem codierten Spektrum-Zugriffsschema.

8. Basisstation nach einem der Ansprüche 1-7, wobei die unterschiedlichen Sendesysteminstanzen (11-14, 31) separate Funkzugriffstechnologien bereitstellen.

9. Basisstation nach einem der Ansprüche 1-8, wobei jede Sendesysteminstanz (11-14, 31) unabhängig und dynamisch konfigurierbar ist in der Form von einem oder mehr von:
Auswählen wenigstens einer Identität aus einer Gruppe von Identitäten, die wenigstens eines umfasst von einer Kennung eines Kommunikationselements der Infrastrukturressource (10, 30), einer Kennung einer Protokollinstanz der Infrastrukturressource (10, 30) und einer Kennung eines Verbindungselements der Infrastrukturressource (10, 30),
Definieren wenigstens eines Sendeprotokolls und/oder wenigstens eines Sendemechanismus für eine Datensendung, Definieren wenigstens eines Kanals für die Datensendung,
Definieren wenigstens einer Steuerprozedur, eines Steuerprotokolls, einer Verwaltungsprozedur und/oder eines Verwaltungsprotokolls,
Definieren wenigstens einer Funkressourcenverwaltungs-Prozedur und/oder -Protokolls.

10. Verfahren zum Betreiben einer Basisstation (10, 30) eines Drahtloskommunikationssystems, umfassend:
einen Schritt zum simultanen Bereitstellen verschiedener Sendesysteminstanzen (11-14, 31) als eine Vielzahl von software-implementierten virtuellen Basisstationen, wobei jede Sendesysteminstanz (11-14, 31) unabhängig und dynamisch konfigurierbar ist und wobei jede Sendesysteminstanz (11-14, 31) eine Funktionalität mit einer Steuerebene, einer Benutzerebene und einer entsprechenden Protokollhierarchie bereitstellt, und
einen Schritt, von einer Verwaltungseinheit der Basisstation, zum Instanziieren einer neuen virtuellen Basisstation und zum Bereitstellen einer vollständigen Kontrolle über die instanziierten virtuellen Basisstationen für verschiedene Kommunikationsdienstleister.

## Revendications

1. Station de base d'un système de communication sans fil, ladite station de base (10, 30) étant conçue pour fournir simultanément différentes instances de systèmes de transmission (11 à 14, 31) sous la forme d'une pluralité de stations de base virtuelles mises en oeuvre par logiciel, chaque instance de système de transmission (11 à 14, 31) pouvant être configurée indépendamment et dynamiquement et chaque instance de système de transmission (11 à 14, 31) fournissant une fonctionnalité avec un sous-système de commande, un sous-système utilisateur et une hiérarchie de protocole correspondante, la station de base comprenant en outre un gestionnaire configuré pour instancier une nouvelle station de base et pour fournir à différents fournisseurs de services de communication la commande intégrale des stations de base virtuelles instanciées.

2. Station de base selon la revendication 1, dans laquelle chaque instance de système de transmission (11 à 14) est associée à une part des ressources physiques fournies par ledit système de communication sans fil.

3. Station de base selon la revendication 2, dans laquelle les ressources physiques comprennent au moins l'une des suivantes : ressources de code, ressources de temps, ressources de fréquences et ressources d'espace.

4. Station de base selon la revendication 2 ou 3, dans laquelle ladite part peut être attribuée dynamiquement.

5. Station de base selon l'une des revendications 2 à 4, comprenant une fonction de commande de l'attribution des ressources destinée à attribuer lesdites ressources physiques auxdites instances de systèmes de transmission (11 à 14, 31).

6. Station de base selon l'une des revendications 1 à 5, dans laquelle ladite fonction de commande de l'attribution des ressources est également conçue pour veiller à ce que chaque instance de système de transmission (11 à 14, 31) obtienne des ressources qui sont négociées entre un administrateur de ladite instance de système de transmission (11 à 14, 31) et ledit gestionnaire des instances de systèmes de transmission (15, 33).

7. Station de base selon l'une des revendications 2 à 6, dans laquelle lesdites instances de systèmes de transmission (11 à 14, 31) accèdent auxdites ressources physiques conformément à un mécanisme d'accès harmonisé aux ressources qui réduit les interférences entre lesdites instances de systèmes de transmission (11 à 14, 31), ledit mécanisme d'accès harmonisé aux ressources comprenant un ou plusieurs des suivants : mécanisme de modulation avec sous-porteuses orthogonales, mécanisme d'ordonnancement temporel et mécanisme codé d'accès au spectre.

8. Station de base selon l'une des revendications 1 à 7, dans laquelle lesdites différentes instances de systèmes de transmission (11 à 14, 31) fournissent des technologies d'accès radio distinctes.

9. Station de base selon l'une des revendications 1 à 8, dans laquelle chaque instance de système de transmission (11 à 14, 31) peut être configurée indépendamment et dynamiquement grâce à une ou plusieurs des opérations suivantes :
sélection d'au moins une identité dans un groupe d'identités comprenant au moins un des identificateurs suivants : identificateur d'un élément de communication de la ressource d'infrastructure (10, 30), identificateur d'une instance de protocole de la ressource d'infrastructure (10, 30), identificateur d'un élément de connectivité de la ressource d'infrastructure (10, 30) ;
définition d'au moins un protocole de transmission et/ou d'au moins un mécanisme de transmission pour une transmission de données ;
définition d'au moins un canal pour la transmission de données ;
définition d'au moins un des éléments suivants : procédure de commande, protocole de commande, procédure de gestion et/ou protocole de gestion ;
définition d'au moins une procédure et/ou d'au moins un protocole de gestion des ressources radio.

10. Procédé de fonctionnement d'une station de base (10, 30) d'un système de communication sans fil comprenant :
une étape consistant à fournir simultanément différentes instances de systèmes de transmission (11 à 14, 31) sous la forme d'une pluralité de stations de base virtuelles mises en oeuvre par logiciel, chaque instance de système de transmission (11 à 14, 31) pouvant être configurée indépendamment et dynamiquement et chaque instance de système de transmission (11 à 14, 31) fournissant une fonctionnalité avec un sous-système de commande, un sous-système utilisateur et une hiérarchie de protocole correspondante ; et
une étape consistant à instancier une nouvelle station de base virtuelle par un gestionnaire de la station de base et à fournir à différents fournisseurs de services de communication la commande intégrale des stations de base virtuelles instanciées.
